# EUROPÄISCHE PATENTANMELDUNG

(11) **EP 2 698 208 A1**
(43) Veröffentlichungstag der Anmeldung: **19.02.2014**
(21) Anmeldenummer: 12180411.6
(22) Anmeldetag: 14.08.2012
(51) Int. Cl.: B04B 5/04, B04B 9/08

(54) **Zentrifugenvorrichtung und Verfahren zum Betreiben einer Zentrifugenvorrichtung**

(71) Anmelder: Fresenius Kabi Deutschland GmbH, 61352 Bad Homburg (DE)
(72) Erfinder: Meisberger, Artur, 66606 St. Wendel (DE); Akdis, Mustafa, 35799 Merenberg (DE); Biehl, Martin, 66606 St. Wendel (DE)
(74) Vertreter: Heimann, Axel Colin

(57) **Zusammenfassung**

Eine Zentrifugenvorrichtung (1) umfasst eine Antriebsvorrichtung (7), einen um eine erste Drehachse (D1) drehbar gelagerten Rotor (3), der mittels der Antriebsvorrichtung (7) in eine Drehbewegung um die erste Drehachse (D1) versetzbar ist, ein Planetenrad (41), das um eine von der ersten Drehachse (D1) unterschiedliche, zweite Drehachse (D2) drehbar an dem Rotor (3) gelagert ist, einen Stator (20), der mit dem Planetenrad (41) in Wirkverbindung steht derart, dass bei einer Drehbewegung des Rotors (3) das Planetenrad (41) sich um die zweite Drehachse (D2) dreht, und eine um eine dritte Drehachse (D3) drehbar angeordnete Zentrifugenkammer (5), die mit dem Planetenrad (41) in Wirkverbindung steht derart, dass bei einer Drehbewegung des Planetenrads (41) um die zweite Drehachse (D2) die Zentrifugenkammer (5) in eine Drehbewegung versetzt wird. Dabei ist vorgesehen, dass die erste Drehachse (D1) und die zweite Drehachse (D2) parallel zueinander gerichtet sind. Auf diese Weise wird eine Zentrifugenvorrichtung zur Verfügung gestellt, die eine kompakte Bauform bei geringer Bauteileanzahl sowie einfacher Konstruktion ermöglicht.

## Beschreibung

Die Erfindung betrifft eine Zentrifugenvorrichtung nach dem Oberbegriff des Anspruchs 1 sowie ein Verfahren zum Betreiben einer Zentrifugenvorrichtung.

Eine derartige Zentrifugenvorrichtung umfasst eine Antriebsvorrichtung, einen um eine erste Drehachse drehbar gelagerten Rotor, der mittels der Antriebsvorrichtung in eine Drehbewegung um die erste Drehachse versetzbar ist, ein Planetenrad, das um eine von der ersten Drehachse unterschiedliche, zweite Drehachse drehbar an dem Rotor gelagert ist, und einen Stator, der mit dem Planetenrad in Wirkverbindung steht derart, dass bei einer Drehbewegung des Rotors das Planetenrad sich um die zweite Drehachse dreht. Weiter ist eine um eine dritte Drehachse drehbar angeordnete Zentrifugenkammer vorgesehen, die mit dem Planetenrad in Wirkverbindung steht derart, dass bei einer Drehbewegung des Planetenrads um die zweite Drehachse die Zentrifugenkammer in eine Drehbewegung versetzt wird.

Eine solche Zentrifugenvorrichtung kann insbesondere eine so genannte gleitdichtungsfreie Durchflusszentrifuge verwirklichen, die beispielsweise zur Zellseparation oder als Autotransfusionsgerät zum Einsatz kommen kann. Bei Verwendung zur Autotransfusion beispielsweise wird im Rahmen einer Operation Blut eines Patienten an einem Operationsort abgesaugt, das innerhalb des Autotransfusionsgeräts aufbereitet und anschließend dem Patienten wieder zugeführt wird. Ein wesentliches Bauteil eines solchen Autotransfusionsgeräts stellt die Zentrifugenkammer dar, in der rote Blutkörperchen von anderen Blutbestandteilen separiert und mit einer Kochsalzlösung gewaschen werden, um dann in gereinigter und konzentrierter Form dem Patienten wiederum zugeführt zu werden. Die Aufbereitung läuft hierbei kontinuierlich ab, indem Blut die rotierende Zentrifugenkammer durchfließt und ein Konzentrat roter Blutkörperchen z.B. in einen Retransfusionsbeutel gefördert wird.

Um einen Durchfluss durch die Zentrifugenkammer ermöglichen zu können, ist bei solchen Zentrifugenvorrichtungen regelmäßig erforderlich, dass ein oder mehrere Schläuche hin zu der Zentrifugenkammer geführt werden, um die Zentrifugenkammer strömungstechnisch beispielsweise mit einem Pumpenbett zu verbinden. Um dabei ein Verwinden der Schläuche im Betrieb der Zentrifugenvorrichtung aufgrund der Drehbewegung der Zentrifugenkammer zu vermeiden, verwirklichen solche Zentrifugenvorrichtungen das so genannte 2-Omega-Prinzip (auch bezeichnet als Adams-Prinzip), demgemäß die Schläuche mit der halben Drehgeschwindigkeit der Zentrifugenkammer der Zentrifugenkammer nachgeführt werden. Dies ermöglicht eine feste Verbindung der Schläuche einerseits mit beispielsweise einem Pumpenbett und andererseits mit der Zentrifugenkammer, ohne dass die Schläuche im Betrieb der Zentrifugenvorrichtung in sich verdreht (verwunden) werden.

Die Schläuche können hierzu beispielsweise an dem Rotor der Zentrifugenvorrichtung geführt werden, wobei der Rotor sich mit der halben Drehgeschwindigkeit der Zentrifugenkammer dreht und die Schläuche somit der Zentrifugenkammer nachführt.

Unterschiedliche Antriebskonzepte zum Antreiben des Rotors und der Zentrifugenkammer sind vorgeschlagen worden. Diesen Antriebskonzepten ist gemein, dass sie einen vergleichsweise großen Bauraum der Zentrifugenvorrichtung erforderlich machen und vergleichsweise aufwendig in ihrer Konstruktion sind.

Eine herkömmliche, beispielsweise aus der DE 32 42 541 C2 bekannte Zentrifugenvorrichtung verwendet einen Riemenantrieb zur Übertragung eines Drehmoments von einer Antriebswelle auf eine Zentrifugenkammer. Solche Riemenantriebe erfordern einen erheblichen Bauraum und können zudem verschleißanfällig sein.

Bei einer aus der EP 0 930 099 A2 bekannten Zentrifugenvorrichtung ist ein Rotor mit einer daran drehbar gelagerten Zentrifugenkammer vorgesehen, der eine Drehbewegung in übersetzter Weise über Kopplungselemente auf die Zentrifugenkammer überträgt derart, dass sich die Zentrifugenkammer im Betrieb der Zentrifugenvorrichtung mit doppelter Drehgeschwindigkeit gegenüber dem Rotor dreht. Die Kopplungselemente sind hierbei als um horizontale Drehachsen drehbar an dem Rotor gelagerte Kegelräder ausgestaltet, die einerseits mit einem Stator und andererseits mit der Zentrifugenkammer zusammenwirken derart, dass ein Übersetzungsgetriebe zur Übersetzung der Drehbewegung des Rotors auf die Zentrifugenkammer geschaffen wird.

Obwohl bei der Lösung der EP 0 930 099 A2 auf ein Riemengetriebe verzichtet werden kann, erfordert die Zentrifugenvorrichtung insbesondere in axialer Richtung (entlang der Drehachse des Rotors) einen vergleichsweise großen Bauraum.

Es besteht ein Bedürfnis nach einer Zentrifugenvorrichtung, die einfach aufgebaut ist, einen geringen Bauraumbedarf aufweist und eine vergleichsweise geringe Anzahl an Bauteilen benötigt.

Aufgabe der vorliegenden Erfindung ist es, eine Zentrifugenvorrichtung und ein Verfahren zum Betreiben einer Zentrifugenvorrichtung zur Verfügung zu stellen, die eine kompakte Bauform der Zentrifugenvorrichtung bei geringer Bauteileanzahl sowie einfacher Konstruktion ermöglichen.

Diese Aufgabe wird durch einen Gegenstand mit den Merkmalen des Anspruchs 1 gelöst.

Demnach sind bei einer Zentrifugenvorrichtung der eingangs genannten Art die erste Drehachse und die zweite Drehachse parallel zueinander gerichtet.

Die vorliegende Erfindung geht von dem Gedanken aus, die erste Drehachse, um die der Rotor drehbar gelagert ist, und die zweite Drehachse, um die das Planetenrad zur Übertragung einer Drehbewegung auf die Zentrifugenkammer drehbar gelagert ist, parallel zueinander anzuordnen, so dass die Drehebenen des Rotors und des Planetenrads parallel zueinander gerichtet sind. Im Betrieb wird der Rotor über die Antriebsvorrichtung angetrieben und nimmt das drehbar an dem Rotor gelagerte Planetenrad mit. Durch Wechselwirkung des Planetenrads mit dem Stator wird dabei das Planetenrad in eine Drehbewegung relativ zu dem Rotor um die exzentrisch zur ersten Drehachse angeordnete, zweite Drehachse versetzt, wobei das Planetenrad diese Drehbewegung über ein geeignetes Getriebe auf die Zentrifugenkammer überträgt und darüber die Zentrifugenkammer in eine Drehbewegung versetzt.

Dadurch, dass die Drehachse des Rotors und des Planetenrads parallel zueinander ausgerichtet sind, kann die Zentrifugenvorrichtung in axialer Richtung kompakt aufgebaut werden. Die Zentrifugenvorrichtung kann dabei eine geringe Anzahl von Bauteilen verwenden und kann auf Riemengetriebe verzichten, was vorteilhaft hinsichtlich der Verschleißeigenschaften und des Bauraumbedarfs der Zentrifugenvorrichtung ist. Durch die Reduktion der Anzahl der erforderlichen Bauteile und durch die erreichbare Einfachheit im Aufbau ergibt sich zudem ein Kosteneinsparungspotential für die Herstellung solcher Zentrifugenvorrichtungen.

Vorteilhafterweise dreht sich der Rotor mit einer ersten Drehgeschwindigkeit und die Zentrifugenkammer mit einer im Vergleich zur ersten Drehgeschwindigkeit doppelt so großen, zweiten Drehgeschwindigkeit. Der Rotor kann hierbei einen oder mehrere Schläuche zur Verbindung der Zentrifugenkammer mit externen Gerätschaften, beispielsweise einem Pumpenbett oder Flüssigkeitsbehältern wie Transfusionsbeuteln, führen, so dass der Rotor die daran angeordneten Schläuche mit halber Drehgeschwindigkeit im Vergleich zur Drehgeschwindigkeit der Zentrifugenkammer nachführt. Dies ermöglicht nach dem sogenannten 2-Omega-Prinzip (Adams-Prinzip) eine feste Verbindung der Schläuche einerseits mit der Zentrifugenkammer und andererseits mit den externen Gerätschaften, ohne dass im Betrieb der Zentrifugenkammer die Schläuche verwinden

Im Betrieb der Zentrifugenvorrichtung wird der Rotor über die Antriebsvorrichtung in eine Drehbewegung versetzt. Der Rotor nimmt dabei das exzentrisch zum Rotor drehbar gelagerte Planetenrad mit, wobei das Planetenrad durch Wechselwirkung mit dem Stator in eine (exzentrische) Drehbewegung relativ zu dem Rotor versetzt wird. Die Wechselwirkung zwischen dem Planetenrad und dem Stator kann beispielsweise über an dem Stator angeordnete magnetische Mittel erfolgen, die mit magnetischen Mitteln des Planetenrads zur Herstellung der Wirkverbindung zwischen dem Stator und dem Planetenrad wechselwirken. Die magnetischen Mittel an dem Stator und an dem Planetenrad können beispielsweise durch umfänglich an dem Stator bzw. dem Planetenrad angeordnete Magnete verwirklicht sein, wobei die Magnete an dem Stator und an dem Planetenrad jeweils eine alternierende Polung aufweisen, so dass auf einen Nordpol eines Magneten jeweils ein Südpol folgt und umgekehrt.

Der Stator bildet auf diese Weise ein Sonnenrad mit an einer Innenumfangsfläche angeordneten Magneten aus, das konzentrisch zur (ersten) Drehachse des Rotors ist und bei einer Drehbewegung des Rotors ortsfest bleibt und sich nicht mitdreht. Die magnetischen Mittel des Planetenrads sind hingegen an einer äußeren zylindrischen Mantelfläche des Planetenrads angeordnet und wechselwirken mit den magnetischen Mitteln des Stators bei einer Drehbewegung des Rotors derart, dass das Planetenrad nach Art eines formschlüssigen Eingriffs am Stator abrollt und auf diese Weise relativ zum Rotor gedreht wird. Durch Verwendung solcher magnetischer Mittel am Stator und am Rotor wird jedoch - im Vergleich zu beispielsweise einem Verzahnungseingriff - eine berührungslose Wechselwirkung bereitgestellt, die verschleißfrei ist und zudem keine Geräusche verursacht, so dass die Geräuschentwicklung an der Zentrifugenvorrichtung im Betrieb reduziert ist.

Alternativ kann der Stator anstelle der magnetischen Mittel auch eine Verzahnung tragen, die mit einer Verzahnung des Planetenrads in Eingriff ist. Der Stator bildet in diesem Fall wiederum ein Sonnenrad bezüglich des Planetenrads aus, an dem das Planetenrad bei einer Drehung des Rotors abrollt derart, dass das Planetenrad bei einer Drehbewegung des Rotors relativ zu dem Rotor gedreht wird.

Mittels des Planetenrads wird die Drehbewegung in übersetzter Weise auf die Zentrifugenkammer übertragen, so dass im Betrieb der Zentrifugenvorrichtung mittels einer einzigen Antriebsvorrichtung der Rotor und in übersetzter Weise auch die Zentrifugenkammer gedreht werden. Das Planetenrad kann hierzu mit einem Kammerrad der Zentrifugenkammer in Wirkverbindung stehen, wobei hierzu das Planetenrad beispielsweise drehfest mit einem Antriebsrad gekoppelt ist, das beispielsweise über eine Verzahnung mit einer Verzahnung des Kammerrads in Eingriff steht.

Mittels des ein Sonnenrad verwirklichenden Stators, des Planetenrads, des Antriebsrads und des Kammerrads kann die Übersetzung der Drehbewegung des Rotors auf die Zentrifugenkammer eingestellt werden. Denkbar ist hierbei, dass bereits das Planetenrad sich mit doppelter Drehgeschwindigkeit relativ zum Rotor (aber mit entgegengesetztem Drehsinn) dreht, um dann mit einer 1:-1-Übersetzung das Kammerrad anzutreiben und somit die Zentrifugenkammer im gleichen Drehsinn und mit doppelter Drehgeschwindigkeit im Vergleich zum Rotor zu drehen. Denkbar ist aber auch, dass das Planetenrad zusammen mit dem Stator, dem Antriebsrad und dem Kammerrad eine zweistufige Übersetzung verwirklicht, bei dem das Planetenrad sich mit einer Drehgeschwindigkeit dreht, die größer als die Drehgeschwindigkeit des Rotors, aber kleiner als die Drehgeschwindigkeit der Zentrifugenkammer ist. Beispielsweise kann die Drehgeschwindigkeit des Planetenrads (bei entgegengesetztem Drehsinn) der 1,66-fachen Drehgeschwindigkeit des Rotors entsprechen, wobei die Drehgeschwindigkeit des Planetenrads dann über das Antriebsrad und das Kammerrad übersetzt wird, um die Zentrifugenkammer mit doppelter Drehgeschwindigkeit gleichsinnig zum Rotor zu drehen.

Vorteilhafterweise ist die dritte Drehachse (der Zentrifugenkammer) kollinear, also konzentrisch, zur ersten Drehachse (des Rotors) angeordnet. Die Zentrifugenkammer und der Rotor drehen sich somit um dieselbe Drehachse.

Im Betrieb der Zentrifugenvorrichtung ist die Zentrifugenkammer axial festgelegt und steht über das Planetenrad mit dem Rotor in Wirkverbindung, so dass durch Antreiben des Rotors mittels der Antriebsvorrichtung die Zentrifugenkammer gedreht werden kann. Um die Zentrifugenkammer hierbei an dem Rotor zu halten, ist vorteilhafter Weise eine Verriegelungseinrichtung vorgesehen, die an dem Rotor angeordnet ist und sich bei einer Drehbewegung des Rotors um die dem Rotor zugeordnete erste Drehachse zusammen mit dem Rotor dreht. Die Verriegelungseinrichtung dient dazu, die Zentrifugenkammer in axialer Richtung zur der Zentrifugenkammer zugeordneten dritten Drehachse festzulegen, so dass die Zentrifugenkammer axial an dem Rotor gehalten ist und im Betrieb der Zentrifugenvorrichtung sich axial nicht zu dem Rotor bewegen kann.

Die Verriegelungseinrichtung kann hierzu ein um eine vierte Drehachse an dem Rotor schwenkbar gelagertes Betätigungsrad aufweisen, das mit einem Verriegelungsexzenter gekoppelt ist derart, dass die Zentrifugenkammer durch eine Schwenkbewegung des Betätigungsrads um die vierte Drehachse axial verriegelbar oder zum Entnehmen entriegelbar ist. Hierzu kann der Verriegelungsexzenter in einer verriegelten Stellung über eine Verriegelungsrolle mit der Zentrifugenkammer verriegelnd in Eingriff stehen, wobei der Eingriff gelöst werden kann, so dass der Verriegelungsexzenter in einer entriegelten Stellung nicht mehr mit der Zentrifugenkammer in Eingriff steht und die Zentrifugenkammer von dem Rotor entnommen werden kann.

Der Verriegelungsexzenter ist vorteilhafterweise in Richtung der verriegelten Stellung elastisch vorgespannt, so dass, wenn das Betätigungsrad nicht betätigt wird, der Verriegelungsexzenter selbsttätig in seine verriegelnde Stellung gelangt und die Zentrifugenkammer somit an dem Rotor verriegelt ist. Zum elastischen Vorspannen kann beispielsweise eine mechanische Feder, beispielsweise eine Drehfeder, vorgesehen sein, wobei grundsätzlich aber auch andere Mittel zum Vorspannen möglich und denkbar sind.

Die Verriegelungseinrichtung kann grundsätzlich nur einen einzigen Verriegelungsexzenter aufweisen, der verriegelnd mit der Zentrifugenkammer zum axialen Festlegen der Zentrifugenkammer an dem Rotor in Eingriff steht. Vorteilhaft ist aber, wenn die Verriegelungseinrichtung zwei oder mehr, beispielsweise drei Verriegelungsexzenter aufweist, die jeweils mit einem zugeordneten Betätigungsrad in Wirkverbindung stehen, wobei durch Betätigen der Betätigungsräder die einzelnen Verriegelungsexzenter bewegt und dadurch verriegelnd in Eingriff oder entriegelnd außer Eingriff mit der Zentrifugenkammer gebracht werden können.

In einer vorteilhaften Ausgestaltung kann die Antriebsvorrichtung einerseits zum Antreiben des Rotors im normalen Betrieb der Zentrifugenvorrichtung und andererseits zum Betätigen der Verriegelungseinrichtung zum Verriegeln und/oder zum Entriegeln der Zentrifugenkammer dienen. Hierzu kann vorgesehen sein, dass die Antriebsvorrichtung bei einer Drehbewegung einer Motorwelle der Antriebsvorrichtung in eine erste Drehrichtung um die erste Drehachse den Rotor zum Antreiben der Zentrifugenkammer durch Krafteinleitung über das Betätigungsrad mitnimmt. Über das Betätigungsrad wird somit ein Drehmoment auf den Rotor übertragen, indem das Betätigungsrad bei einer Drehbewegung in die erste Drehrichtung beispielsweise an einem zugeordneten Anschlag anschlägt, so dass das Betätigungsrad sich nicht relativ zu dem Rotor verdrehen kann und der Rotor somit in eine Drehbewegung um seine zugeordnete (erste) Drehachse versetzt wird. Bei einer Drehbewegung der Motorwelle in eine der ersten Drehrichtung entgegengesetzte, zweite Drehrichtung hingegen wird der Rotor nicht mitgenommen und das Betätigungsrad somit relativ zu dem Rotor verstellt, so dass die Verriegelungseinrichtung über das Betätigungsrad betätigt wird.

Die Verriegelungseinrichtung kann zur Kopplung mit der Antriebsvorrichtung beispielsweise ein Verriegelungsrad aufweisen, das um die erste Drehachse drehbar mit der Motorwelle der Antriebsvorrichtung gekoppelt ist, so dass das Verriegelungsrad bei einer Drehbewegung des Motors um die erste Drehachse verdreht wird. Das Verriegelungsrad steht mit dem um die vierte Drehachse exzentrisch zum Verriegelungsrad angeordneten Betätigungsrad beispielsweise über Verzahnungen in Eingriff, wobei bei Antreiben des Verriegelungsrads in die erste Drehrichtung das Betätigungsrad an einen Anschlag oder dergleichen an dem Rotor anschlägt und somit nicht relativ zu dem Rotor verdreht werden kann, so dass - angetrieben durch das Verriegelungsrad - der Rotor mitgenommen und in eine Drehbewegung in die erste Drehrichtung um die erste Drehachse versetzt wird. Wird das Verriegelungsrad hingegen in die entgegengesetzte, zweite Drehrichtung angetrieben, so kann das Betätigungsrad sich relativ zu dem Rotor verstellen, um auf diese Weise die Verriegelungseinrichtung beispielsweise zum Entriegeln der Zentrifugenkammer zu betätigen.

Der Rotor ist vorteilhafterweise über einen Freilauf an einem Statorgehäuse der Zentrifugenvorrichtung angeordnet. Der Freilauf ist hierbei derart beschaffen, dass er bei einer Drehbewegung der Motorwelle in die erste Drehrichtung den Rotor drehbar lagert, so dass sich der Rotor frei gegenüber dem Statorgehäuse drehen kann, um eine Drehbewegung auf das Planetenrad und darüber auf die Zentrifugenkammer zu übertragen. Bei einer Drehbewegung der Motorwelle in die entgegengesetzte, zweite Drehrichtung hingegen sperrt der Freilauf den Rotor, so dass der Rotor nicht relativ zu dem Statorgehäuse bewegt werden kann und somit festgehalten wird. Beim Betreiben der Antriebsvorrichtung in die zweite Drehrichtung wird somit über das Verriegelungsrad das einem Verriegelungsexzenter zugeordnete Betätigungsrad betätigt, so dass die Verriegelungseinrichtung beispielsweise entriegelt wird und die Zentrifugenkammer somit von dem Rotor entnommen werden kann.

Die Aufgabe wird weiterhin durch ein Verfahren zum Betreiben einer Zentrifugenvorrichtung gelöst, bei dem
- eine Antriebsvorrichtung einen um eine erste Drehachse drehbar gelagerten Rotor in eine Drehbewegung um die erste Drehachse versetzt,
- ein Planetenrad, das um eine von der ersten Drehachse unterschiedliche, zweite Drehachse drehbar an dem Rotor gelagert ist und mit einem Stator in Wirkverbindung steht, bei einer Drehbewegung des Rotors sich um die zweite Drehachse dreht und
- eine um eine dritte Drehachse drehbar angeordnete Zentrifugenkammer bei einer Drehbewegung des Planetenrads um die zweite Drehachse in eine Drehbewegung versetzt wird.

Dabei ist vorgesehen, dass die erste Drehachse und die zweite Drehachse parallel zueinander gerichtet sind.

Zu Vorteilen und vorteilhaften Ausgestaltungen des Verfahrens wird auf das vorangehend zur Zentrifugenvorrichtung Ausgeführte verwiesen, das analog auch auf das Verfahren Anwendung findet.

Der der Erfindung zugrundeliegende Gedanke soll nachfolgend anhand der in den Figuren dargestellten Ausführungsbeispiele näher erläutert werden. Es zeigen:
- Fig. 1: eine schematische Schnittansicht durch eine Zentrifugenvorrichtung mit einem Rotor und einem daran angeordneten Planetenrad;
- Fig. 2: eine schematische Draufsicht auf den Rotor und das daran angeordnete Planetenrad im Zusammenwirken mit einem Stator; und
- Fig. 3: eine schematische Draufsicht auf den Rotor und daran angeordnete Betätigungsräder.

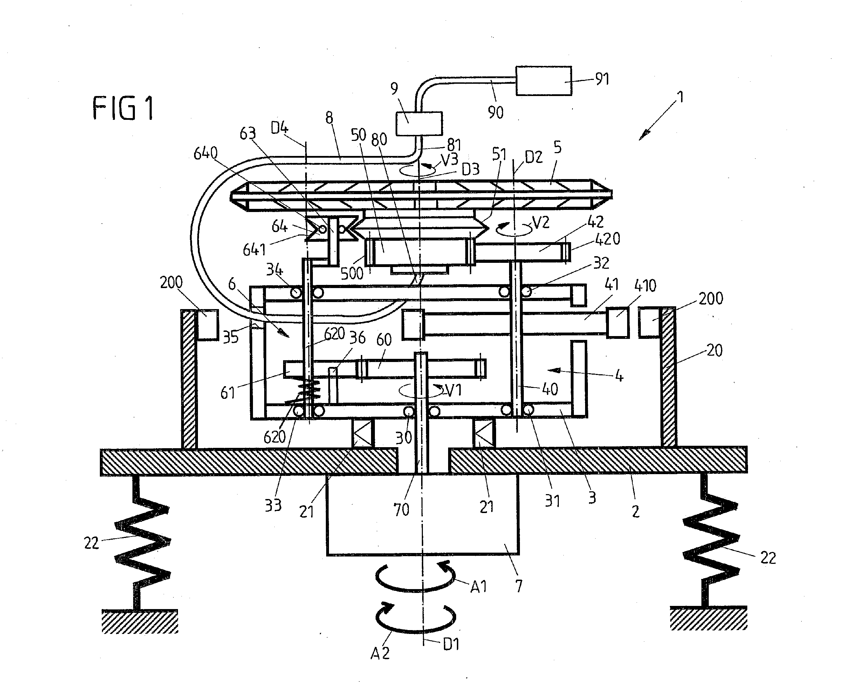

Fig. 1 bis 3 zeigen in unterschiedlichen Ansichten ein Ausführungsbeispiel einer Zentrifugenvorrichtung 1, die einen drehbaren Rotor 3 und eine drehbare Zentrifugenkammer 5 aufweist.

Die Zentrifugenvorrichtung 1 ist nach Art einer gleitdichtungsfreien Durchflusszentrifuge ausgebildet, bei der die Zentrifugenkammer 5 über einen Schlauch 8 mit einem Anschluss 9 verbunden ist, um über einen weiteren Schlauch 90 eine Strömungsverbindung zu externen Gerätschaften wie beispielsweise einem Pumpenbett 91 oder Flüssigkeitsbehältern wie Transfusionsbeuteln herzustellen. Der Schlauch 8 ist hierbei mit einem ersten Ende 80 fest mit der Zentrifugenkammer 5 und mit einem zweiten Ende 81 fest mit dem Anschluss 9 verbunden.

Der Schlauch 8 ist an einer Durchführung 35 an dem Rotor 3 geführt, wobei sich der Rotor 3 im Betrieb der Zentrifugenvorrichtung 1 mit einer ersten Drehgeschwindigkeit V1 dreht, die halb so groß ist wie die Drehgeschwindigkeit V3 der Zentrifugenkammer 5. Die Zentrifugenvorrichtung 1 verwirklicht auf diese Weise das so genannte 2-Omega-Prinzip (Adams-Prinzip), demgemäß durch Nachführung des Schlauchs 8 bei fester Anbindung seiner Enden 80, 81 an die Zentrifugenkammer 5 einerseits und den Anschluss 9 andererseits ein Verwinden des Schlauchs 8 bei einer Drehbewegung der Zentrifugenkammer 5 verhindert wird.

Mittels der Zentrifugenkammer 5 können beispielsweise Flüssigkeiten, insbesondere Blut, aufbereitet werden, indem einzelne Bestandteile durch Zentrifugation von anderen Bestandteilen separiert werden. Beispielsweise kann im Rahmen einer Autotransfusion ein Konzentrat roter Blutkörperchen gewonnen werden, das in gereinigter Form einem Patienten wieder zugeführt werden kann.

Der Rotor 3 ist um eine Drehachse D1 drehbar gelagert, die der Drehachse D3 der Zentrifugenkammer 5 entspricht. An dem Rotor 3 ist um eine exzentrisch angeordnete, aber parallel zur Drehachse D1 des Rotors 3 gerichtete Drehachse D2 ein Planetenrad 41 über Lager 31, 32 drehbar gelagert, das Bestandteil eines Antriebsstrangs 4 zur Übertragung einer Drehbewegung von dem Rotor 3 auf die Zentrifugenkammer 5 ist.

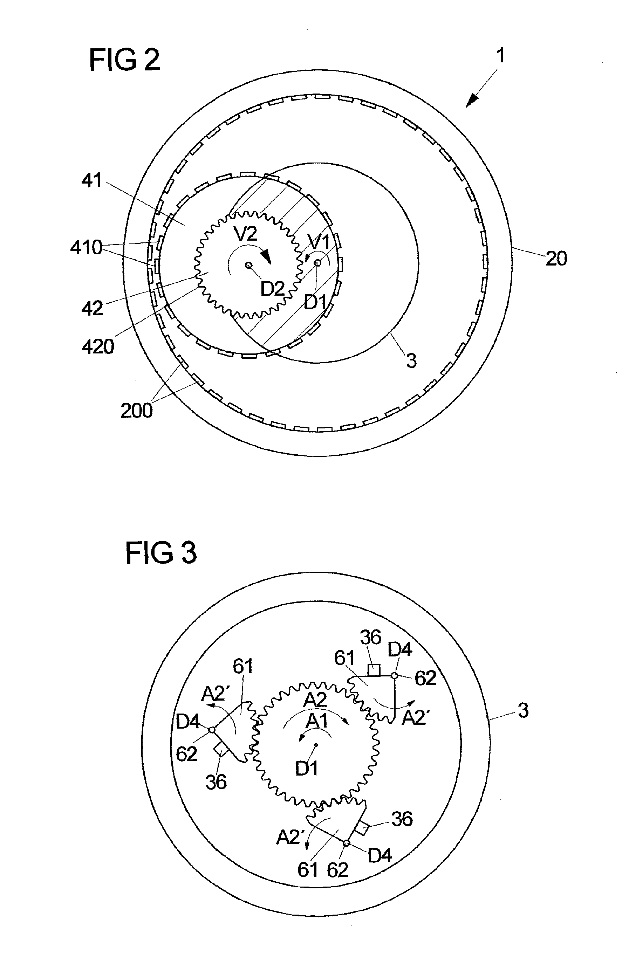

Das Planetenrad 41 ist, wie aus Fig. 2 ersichtlich, nach Art einer Kreisscheibe ausgestaltet und trägt an seiner äußeren Umfangsfläche magnetische Mittel 410 in Form einzelner Magnete, die mit alternierender Polung an der äußeren zylindrischen Mantelfläche des Planetenrads 41 angeordnet sind. Die magnetischen Mittel 410 bewirken eine Wechselwirkung mit an einem Stator 20 angeordneten magnetischen Mitteln 200 in Form von eine alternierende Polung aufweisenden Magneten (siehe Fig. 2) derart, dass bei einer Drehbewegung des Rotors 3 um seine zugeordnete Drehachse D1 das Planetenrad 41 in eine gegensinnige Drehbewegung um die Drehachse D2 versetzt wird.

Die magnetischen Mittel 410, 200 bewirken eine Wechselwirkung zwischen dem Planetenrad 41 und dem Stator 20, der in seiner Wirkung einem formschlüssigen (Verzahnungs-)Eingriff entspricht. Bei einer Drehbewegung des Rotors 3 um die zugeordnete Drehachse D1 wird entsprechend die Drehachse D2 des Planetenrads 41 exzentrisch um die Drehachse D1 des Rotors 3 bewegt, was zur Folge hat, dass das Planetenrad 41 an dem Stator 20 abrollt und somit in ein gegensinnige Drehbewegung zum Rotor 3 versetzt wird.

Anstelle einer Wechselwirkung über die magnetischen Mittel 410, 200 kann auch ein Verzahnungseingriff vorgesehen sein. In diesem Fall ist an dem Planetenrad 41 eine Außenverzahnung angeordnet, die mit einer Innenverzahnung an dem Stator 20 in Eingriff steht derart, dass bei einer Drehbewegung des Rotors 3 das Planetenrad 41 an dem Stator 20 abrollt und somit in eine Drehbewegung versetzt wird.

Das Planetenrad 41 ist an einer Welle 40 angeordnet, über die das Planetenrad 41 über die Lager 31, 32 drehbar an dem Rotor 3 gelagert ist. Mit der Welle 40 ist zudem ein Antriebsrad 42 verbunden, das über eine Verzahnung 420 mit einer Verzahnung 500 eines Kammerrads 50 der Zentrifugenkammer 5 in Eingriff steht. Dreht sich das Planetenrad 41 im Betrieb der Zentrifugenvorrichtung 1 um seine zugeordnete Drehachse D2, so dreht sich das Antriebsrad 42 gleichsinnig und mit gleicher Drehgeschwindigkeit und versetzt das Kammerrad 50 und darüber die Zentrifugenkammer 5 in eine Drehbewegung, die gegensinnig zur Drehbewegung des Antriebsrads 42 und des Planetenrads 41 und damit gleichsinnig zur Drehbewegung des Rotors 3 ist.

Der Stator 20 stellt bezüglich des Planetenrads 41 ein Sonnenrad dar, um das das Planetenrad 41 im Betrieb der Zentrifugenvorrichtung 1 umläuft und mittels dessen das Planetenrad 41 in eine Drehbewegung relativ zu dem Rotor 3 versetzt wird. Das durch den Stator 20 mit seinen magnetischen Mitteln 200 gebildete Sonnenrad und das Planetenrad 41 mit seinen magnetischen Mitteln 410 befinden sich hierbei in derselben axialen Ebene.

Im Betrieb der Zentrifugenvorrichtung 1 versetzt eine Antriebsvorrichtung 7, die an einem fest mit dem Stator 20 verbundenen und zur Schwingungsentkopplung der Zentrifugenvorrichtung 1 über Stützfedern 22 gegenüber der Umgebung abgestützten Statorgehäuse 2 angeordnet ist, über eine Motorwelle 70 den Rotor 3 in eine Drehbewegung um die dem Rotor 3 zugeordnete Drehachse D1 in eine Drehrichtung A1 (das Einleiten des Drehmoments in den Rotor 3 erfolgt über eine Verriegelungseinrichtung 6, wie nachfolgend noch erläutert werden soll). Durch die Drehbewegung des Rotors 3 läuft das Planetenrad 41 in dem Stator 20 um und wird seinerseits in eine Drehbewegung versetzt, die über das Antriebsrad 42 und das Kammerrad 50 auf die Zentrifugenkammer 5 übertragen wird. Der Antriebsstrang 4 verwirklicht hierbei ein Übersetzungsgetriebe, bei dem die Drehbewegung des Rotors 3 in übersetzter Weise in eine Drehbewegung der Zentrifugenkammer 5 übersetzt wird derart, dass sich die Zentrifugenkammer 5 im Betrieb der Zentrifugenvorrichtung 1 mit doppelter Drehgeschwindigkeit V3 gegenüber der Drehgeschwindigkeit V1 des Rotors 3 dreht. Der Gesamtübersetzungsfaktor des Antriebsstrangs 4 beträgt somit 2, wobei die Übersetzung zweistufig erfolgt derart, dass die Drehbewegung des Rotors 3 in übersetzter Weise auf das Planetenrad 41 übertragen wird und die Drehbewegung des Planetenrads 41 wiederum in übersetzter Weise in eine Drehbewegung der Zentrifugenkammer 5 übersetzt wird. So kann sich beispielsweise das Planetenrad 41 mit einer Drehgeschwindigkeit V2 drehen, die im Betrag der 1,66-fachen Drehgeschwindigkeit V1 des Rotors 3 entspricht. Die Drehgeschwindigkeit V2 des Planetenrads 41 wird dann mittels des Antriebsrads 42 und des Kammerrads 50 übersetzt in die Drehgeschwindigkeit V3 der Zentrifugenkammer 5, die der doppelten Drehgeschwindigkeit V1 des Rotors 3 entspricht.

Die Antriebsvorrichtung 7, beispielsweise ausgestaltet durch einen Elektromotor, steht über ihre Motorwelle 70 mit einem Verriegelungsrad 60 einer Verriegelungseinrichtung 6 in Eingriff und überträgt im normalen Betrieb der Zentrifugenvorrichtung 1 ein Drehmoment über das Verriegelungsrad 60 sowie drei Betätigungsräder 61 (siehe Fig. 3) auf den Rotor 3. Die Motorwelle 60 ist über ein Lager 30 drehbar an dem Rotor 3 gelagert und ist fest mit dem Verriegelungsrad 60 verbunden, das wiederum in Verzahnungseingriff mit den Betätigungsrädern 61 steht.

Die Betätigungsräder 61 sind an jeweils einer Welle 62 angeordnet, die über Lager 33, 34 um eine vierte Drehachse D4 verschwenkbar an dem Rotor 3 gelagert ist (siehe Fig. 1).

Im normalen Betrieb der Zentrifugenvorrichtung 1 wird die Motorwelle 70 in eine Drehrichtung A1 um die Drehachse D1 gedreht, so dass sich das Verriegelungsrad 60 entsprechend dreht. Das Verriegelungsrad 60 wirkt hierbei auf die drei zugeordneten Betätigungsräder 61 (siehe Fig. 3) ein, die bei einem derartigen Drehsinn des Verriegelungsrads 60 an jeweils einem zugeordneten Anschlag 36 anschlagen und somit nicht relativ zu dem Rotor 3 bewegt werden können. Entsprechend wird der Rotor 3 mitgenommen und in eine Drehbewegung in die Drehrichtung A1 um die Drehachse D1 versetzt, die, wie vorangehend geschildert, über den Antriebsstrang 4 in übersetzter Weise auf die Zentrifugenkammer 5 übertragen wird.

Die Verriegelungseinrichtung 6 ist dazu ausgestaltet, über jeweils mit einem Verriegelungsexzenter 63 gekoppelte Verriegelungsrollen 64 die Zentrifugenkammer 5 axial zu verriegeln derart, dass die Zentrifugenkammer 5 sich in einer verriegelten Stellung nicht axial entlang der zugeordneten Drehachse D3 relativ zu dem Rotor 3 bewegen kann. Jede Verriegelungsrolle 64 ist hierzu über ein Lager 640 an dem jeweils zugeordneten Verriegelungsexzenter 63 gelagert und weist eine Nut 641 auf, die in einem verriegelten Zustand mit einem umlaufenden Steg 51 an der Zentrifugenkammer 5 in Eingriff steht, so dass die Zentrifugenkammer 5 axial in Position gehalten wird.

In der schematischen Schnittansicht gemäß Fig. 1 ist nur eine Verriegelungsrolle 64 dargestellt, die einem Verriegelungsexzenter 63 und einem Betätigungsrad 61 zugeordnet ist. An dem Rotor 3 sind jedoch, wie aus Fig. 3 ersichtlich, gleichverteilt um die Drehachse D1 insgesamt drei Betätigungsräder 61 angeordnet, denen jeweils ein Verriegelungsexzenter 63 mit einer daran angeordneten Verriegelungsrolle 64 zugeordnet ist, so dass insgesamt drei Verriegelungsexzenter 63 und drei Verriegelungsrollen 64 vorhanden sind.

Die Betätigungsräder 61 sind bei dem dargestellten Ausführungsbeispiel jeweils nach Art eines Viertelkreisrades ausgestaltet. Denkbar sind aber auch andere Bauformen.

Im normalen Betrieb der Zentrifugenvorrichtung 1 werden die Verriegelungsexzenter 63 zusammen mit dem Rotor 3 mit der Drehgeschwindigkeit V1 des Rotors 3 um die Drehachse D1 verdreht. Weil die Zentrifugenkammer 5 sich mit der doppelten Drehgeschwindigkeit V3 bewegt, rollen die Verriegelungsrollen 64 an dem Steg 51 ab und werden somit jeweils um den zugeordneten Verriegelungsexzenter 64 gedreht, wobei der verriegelnde Eingriff des Stegs 51 in die Nuten 641 jedoch bestehen bleibt.

Die Verriegelungseinrichtung 6 kann einen verriegelten Zustand (dargestellt in Fig. 1) und einen entriegelten Zustand einnehmen. In dem verriegelten Zustand stehen die Verriegelungsrollen 64 jeweils über ihre Nut 641 mit dem umlaufenden Steg 51 der Zentrifugenkammer 5 in Eingriff, so dass die Zentrifugenkammer 5 axial festgelegt ist. In dem entriegelten Zustand hingegen sind die Verriegelungsrollen 64 radial von dem Steg 51 entfernt, so dass der Steg 51 nicht mehr in die Nuten 641 der Verriegelungsrollen 64 eingreift und die Zentrifugenkammer 5 somit von dem Rotor 3 entnommen werden kann.

Die Betätigung der Verriegelungsexzenter 64 erfolgt über die Betätigungsräder 61. In einem normalen Betriebszustand, in dem über die Verriegelungseinrichtung 6 der Rotor 3 angetrieben wird und die Betätigungsräder 61 jeweils mit dem zugeordneten Anschlag 36 in Anlage sind, befindet sich die Verriegelungseinrichtung 6 hierbei in ihrer verriegelten Stellung, in der die Zentrifugenkammer 5 axial festgelegt ist. In dieser verriegelten Stellung werden die Betätigungsräder 61 auch durch die Krafteinwirkung der Antriebsvorrichtung 7 in Anlage mit dem Anschlag 36 gehalten.

Soll die Verriegelungseinrichtung 6 in ihren entriegelten Zustand überführt werden, so werden hierzu, nach dem Anhalten des Rotors 3 und der Zentrifugenkammer 5, durch Umkehr der Drehrichtung der Antriebsvorrichtung 7 und Antreiben der Motorwelle 70 in eine entgegengesetzte Drehrichtung A2 (siehe Fig. 1), die Betätigungsräder 61 um ihre jeweils zugeordnete exzentrische Drehachse D4 in eine Drehrichtung A2' (siehe Fig. 3) verschwenkt, so dass über den jeweils zugeordneten Verriegelungsexzenter 63 die Verriegelungsrollen 64 bewegt und außer Eingriff von dem umlaufenden Steg 51 der Zentrifugenkammer 5 gebracht werden.

Das Antreiben des Rotors 3 und die Betätigung der Verriegelungseinrichtung 6 erfolgt somit über dieselbe Antriebsvorrichtung 7, die in Abhängigkeit von ihrer Drehrichtung A1, A2 entweder den Rotor 3 antreibt und in eine Drehbewegung versetzt oder die Betätigungsräder 61 bei stillstehendem Rotor 3 relativ zu dem Rotor 3 bewegt und auf diese Weise die Verriegelungseinrichtung 6 verstellt.

An der jedem Betätigungsrad 61 zugeordneten Welle 62 ist jeweils eine Drehfeder 620 angeordnet, die das Betätigungsrad 61 in seine verriegelte Stellung (siehe Fig. 3) vorspannt, so dass die Verriegelungseinrichtung 6 selbsttätig verriegelt, wenn keine Verstellkraft über die Antriebsvorrichtung 7 eingeleitet wird.

Die Drehfeder 620 muss nicht zwangsläufig an der Welle 62 angeordnet sein, sondern kann beispielsweise auch auf die Motorwelle 70 einwirken.

Der Rotor 3 ist über einen Freilauf 21 an dem Statorgehäuse 2 gelagert. Der Freilauf 21 lagert hierbei den Rotor 3 drehbar, wenn der Rotor 3 in die Drehrichtung A1 zum Antreiben der Zentrifugenkammer 5 gedreht wird. Wird die Antriebsrichtung 7 hingegen in die umgekehrte Drehrichtung A2 betrieben, um die Verriegelungseinrichtung 6 zu betätigen, so sperrt der Freilauf 21 eine Bewegung des Rotors 3 relativ zu dem Statorgehäuse 2, so dass der Rotor 3 nicht mitgenommen werden kann und ortsfest in Position an dem Statorgehäuse 2 gehalten wird.

Der der Erfindung zugrundeliegende Gedanke ist nicht auf die vorangehend geschilderten Ausführungsbeispiele beschränkt, sondern lässt sich auch bei gänzlich anders gearteten Ausführungsformen verwirklichen.

Denkbar ist beispielsweise, bei einer Verriegelungseinrichtung mehr oder weniger als drei Verriegelungsrollen zum axialen Festlegen der Zentrifugenkammer vorzusehen.

Denkbar ist zudem, mehr als ein Planetenrad zum Übertragen einer Drehbewegung auf die Zentrifugenkammer vorzusehen. Beispielsweise können auch drei Planetenräder vorgesehen sein, die um die dem Rotor zugeordnete Drehachse verteilt an dem Rotor gelagert sind und in symmetrischer Weise die Zentrifugenkammer antreiben.

### Bezugszeichenliste

- 1: Zentrifugenvorrichtung
- 2: Statorgehäuse
- 20: Stator
- 200: Magnetische Mittel
- 21: Freilauf
- 22: Stützfedern
- 3: Rotor
- 30-34: Lager
- 35: Durchführung
- 36: Anschlag
- 4: Antriebsstrang
- 40: Welle
- 41: Planetenrad
- 410: Magnetische Mittel
- 42: Antriebsrad
- 420: Verzahnung
- 5: Zentrifugenkammer
- 50: Kammerrad
- 500: Verzahnung
- 51: Umlaufender Steg
- 6: Verriegelungseinrichtung
- 60: Verriegelungsrad
- 61: Betätigungsrad
- 62: Welle
- 620: Drehfeder
- 63: Verriegelungsexzenter
- 64: Verriegelungsrolle
- 640: Lager
- 641: Nut
- 7: Antriebsvorrichtung (Motor)
- 70: Motorwelle
- 8: Schlauch
- 80,81: Ende
- 9: Anschluss
- 90: Schlauch
- 91: Pumpenbett
- A1, A2, A2': Drehrichtung
- D1-D4: Drehachse
- V1, V2, V3: Drehgeschwindigkeit

## Patentansprüche

1. Zentrifugenvorrichtung (1), mit
- einer Antriebsvorrichtung (7),
- einem um eine erste Drehachse (D1) drehbar gelagerten Rotor (3), der mittels der Antriebsvorrichtung (7) in eine Drehbewegung um die erste Drehachse (D1) versetzbar ist,
- einem Planetenrad (41), das um eine von der ersten Drehachse (D1) unterschiedliche, zweite Drehachse (D2) drehbar an dem Rotor (3) gelagert ist,
- einem Stator (20), der mit dem Planetenrad (41) in Wirkverbindung steht derart, dass bei einer Drehbewegung des Rotors (3) das Planetenrad (41) sich um die zweite Drehachse (D2) dreht, und
- einer um eine dritte Drehachse (D3) drehbar angeordneten Zentrifugenkammer (5), die mit dem Planetenrad (41) in Wirkverbindung steht derart, dass bei einer Drehbewegung des Planetenrads (41) um die zweite Drehachse (D2) die Zentrifugenkammer (5) in eine Drehbewegung versetzt wird,
**dadurch gekennzeichnet,**
**dass** die erste Drehachse (D1) und die zweite Drehachse (D2) parallel zueinander gerichtet sind.

2. Zentrifugenvorrichtung (1) nach Anspruch 1, **dadurch gekennzeichnet, dass** der Rotor (3) sich mit einer ersten Drehgeschwindigkeit (V1) und die Zentrifugenkammer (5) sich mit einer im Vergleich zur ersten Drehgeschwindigkeit (V1) doppelt so großen, zweiten Drehgeschwindigkeit (V3) dreht.

3. Zentrifugenvorrichtung (1) nach Anspruch 1 oder 2, **dadurch gekennzeichnet, dass** der Stator (20) magnetische Mittel (200) trägt, die mit magnetischen Mitteln (410) des Planetenrads (41) zur Herstellung der Wirkverbindung zwischen dem Stator (20) und dem Planetenrad (41) wechselwirken.

4. Zentrifugenvorrichtung (1) nach Anspruch 1 oder 2, **dadurch gekennzeichnet, dass** der Stator (20) eine Verzahnung trägt, die mit einer Verzahnung des Planetenrads (41) zur Herstellung der Wirkverbindung zwischen dem Stator (20) und dem Planetenrad (41) in Eingriff steht.

5. Zentrifugenvorrichtung (1) nach einem der vorangehenden Ansprüche, **dadurch gekennzeichnet, dass** das Planetenrad (41) mit einem Kammerrad (50) der Zentrifugenkammer (5) in Wirkverbindung steht.

6. Zentrifugenvorrichtung (1) nach Anspruch 5, **dadurch gekennzeichnet, dass** das Planetenrad (41) drehfest mit einem Antriebsrad (42) gekoppelt ist und über das Antriebsrad (42) mit dem Kammerrad (50) in Eingriff steht.

7. Zentrifugenvorrichtung (1) nach einem der vorangehenden Ansprüche, **dadurch gekennzeichnet, dass** die dritte Drehachse (D3) und die erste Drehachse (D1) kollinear zueinander ausgerichtet sind.

8. Zentrifugenvorrichtung (1) nach einem der vorangehenden Ansprüche, **dadurch gekennzeichnet, dass** an dem Rotor (3) eine Verriegelungseinrichtung (6) zum axialen Festlegen der Zentrifugenkammer (5) an dem Rotor (3) angeordnet ist, die sich bei einer Drehbewegung des Rotors (3) um die erste Drehachse (D1) zusammen mit dem Rotor (3) dreht.

9. Zentrifugenvorrichtung (1) nach Anspruch 8, **dadurch gekennzeichnet, dass** die Verriegelungseinrichtung (6) ein um eine vierte Drehachse (D4) an dem Rotor (3) schwenkbar gelagertes Betätigungsrad (61) aufweist, das mit einem Verriegelungsexzenter (63) gekoppelt ist derart, dass die Zentrifugenkammer (5) durch eine Schwenkbewegung des Betätigungsrads (61) um die vierte Drehachse (D4) axial verriegelbar oder zum Entnehmen entriegelbar ist.

10. Zentrifugenvorrichtung (1) nach Anspruch 9, **dadurch gekennzeichnet, dass** der Verriegelungsexzenter (63) in einer verriegelten Stellung über eine Verriegelungsrolle (64) mit der Zentrifugenkammer (5) verriegelnd in Eingriff steht und in einer entriegelten Stellung nicht mit der Zentrifugenkammer (5) in Eingriff steht.

11. Zentrifugenvorrichtung (1) nach Anspruch 9 oder 10, **dadurch gekennzeichnet, dass** der Verriegelungsexzenter (63) in Richtung der verriegelten Stellung elastisch vorgespannt ist.

12. Zentrifugenvorrichtung (1) nach einem der Ansprüche 9 bis 11, **dadurch gekennzeichnet, dass** die Verriegelungseinrichtung drei um die erste Drehachse (D1) verteilt an dem Rotor (3) angeordnete Betätigungsräder (61) aufweist, denen jeweils ein Verriegelungsexzenter (63) zugeordnet ist.

13. Zentrifugenvorrichtung (1) nach einem der Ansprüche 9 bis 12, **dadurch gekennzeichnet, dass** die Antriebsvorrichtung (7) bei einer Drehbewegung einer Motorwelle (70) in eine erste Drehrichtung (A1) um die erste Drehachse (D1) den Rotor (3) mittels des Betätigungsrads (61) mitnimmt, bei einer Drehbewegung der Motorwelle (70) in eine der ersten Drehrichtung (A1) entgegengesetzte, zweite Drehrichtung (A2) den Rotor (3) hingegen nicht mitnimmt und das Betätigungsrad (61) relativ zu dem Rotor (3) verstellt.

14. Zentrifugenvorrichtung (1) nach Anspruch 13, **dadurch gekennzeichnet, dass** die Verriegelungseinrichtung (6) ein mit der Antriebsvorrichtung (7) gekoppeltes, mit dem Betätigungsrad (61 in Eingriff stehendes Verriegelungsrad (60) aufweist, das mittels der Antriebsvorrichtung (7) in eine Drehbewegung um die erste Drehachse (D1) versetzbar ist.

15. Zentrifugenvorrichtung (1) nach Anspruch 13 oder 14, **dadurch gekennzeichnet, dass** der Rotor (3) über einen Freilauf (21) an einem Statorgehäuse (2) angeordnet ist, wobei der Freilauf (21) derart beschaffen ist, dass der Freilauf (21) bei einer Drehbewegung der Motorwelle (70) in die erste Drehrichtung (A1) den Rotor (3) drehbar lagert, bei einer Drehbewegung der Motorwelle (70) in die zweite Drehrichtung (A2) den Rotor (3) hingegen sperrt.

16. Verfahren zum Betreiben einer Zentrifugenvorrichtung (1), bei dem
- eine Antriebsvorrichtung (7) einen um eine erste Drehachse (D1) drehbar gelagerten Rotor (3) in eine Drehbewegung um die erste Drehachse (D1) versetzt,
- ein Planetenrad (41), das um eine von der ersten Drehachse (D1) unterschiedliche, zweite Drehachse (D2) drehbar an dem Rotor (3) gelagert ist und mit einem Stator (20) in Wirkverbindung steht, bei einer Drehbewegung des Rotors (3) sich um die zweite Drehachse (D2) dreht und
- eine um eine dritte Drehachse (D3) drehbar angeordnete Zentrifugenkammer (5) bei einer Drehbewegung des Planetenrads (41) um die zweite Drehachse (D2) in eine Drehbewegung versetzt wird,
**dadurch gekennzeichnet,**
**dass** die erste Drehachse (D1) und die zweite Drehachse (D2) parallel zueinander gerichtet sind.
